Europäisches Patentamt

European Patent Office

Office européen des brevets

(19)

(11) Veröffentlichungsnummer: **0 184 549**
**B1**

(12) **EUROPÄISCHE PATENTSCHRIFT**

(45) Veröffentlichungstag der Patentschrift:
13.12.89

(21) Anmeldenummer: 85810499.5

(22) Anmeldetag: 31.10.85

(51) Int. Cl.⁴: **B 32 B 15/08, C 22 C 21/00**

(54) Dünne, umformbare Verbundplatte.

(30) Priorität: 05.11.84 CH 5291/84

(43) Veröffentlichungstag der Anmeldung:
11.06.86 Patentblatt 86/24

(45) Bekanntmachung des Hinweises auf die Patenterteilung: 13.12.89 Patentblatt 89/50

(84) Benannte Vertragsstaaten:
AT BE CH DE FR GB IT LI LU NL SE

(56) Entgegenhaltungen:
EP—A— 0 002 692
DE—B— 1 295 852
FR—A— 2 156 711

(73) Patentinhaber: SCHWEIZERISCHE ALUMINIUM AG
CH-3965 Chippis (CH)

(72) Erfinder: Rodrigues, Pedro
Villenstrasse 35
CH-8200 Schaffhausen (CH)
Erfinder: Büren, Ingo
Kornblumenweg 11
D-7701 Hilzingen (DE)
Erfinder: Timm, Jürgen
Schorenstrasse 4
D-7705 Steisslingen (DE)

Jouve, 18, rue St-Denis, 75001 Paris, France

## Beschreibung

Die Erfindung bezieht sich auf eine dünne, umformbare Verbundplatte aus mehreren Schichten, mit mindestens einer metallischen Deckschicht aus einer Aluminiumlegierung mit einer flachen Spannungs-Dehnungskurve und eine thermoplastische Kernschicht (10) aus Kunststoff.

Verbundstoffe aus einem thermoplastischen Kunststoffkern und mindestens einer Aluminiumdeckschicht sind im Fahrzeugbau wegen ihres geringen Gewichtes, ihrer guten Steifigkeit und ihren ton- und vibrationsdämpfenden Eigenschaften ein begehrter Baustoff. Ausserhalb der architektonischen Anwendungen für den Hochbau liegt ein Hauptproblem — beispielsweise für die Automobilindustrie — in der beschränkten Verformbarkeit der Verbundplatten. Diese Schichtverbundstoffe zeigen eine geringe Biegbarkeit und eine niedrige Streckziehgrenze unter den kombiniert angewendeten, biaxialen Spannungsbeanspruchungen während der Herstellung von Bauteilen.

In den Schriften FR-A-2 156 711 und EP-A-002 692 sind tiefziehfähige Aluminiumverbundschichten bekannt, die als weitere Schicht einen thermoplastischen Kunststoff aufweisen. Jedoch befasst sich die erstgenannte Schrift nur mit als Sperrschichten wirkende Kunststoffschichten im Dickenbereich von etwa 0,025 bis 0,1 mm und die zweitgenannte Schrift mit Aluminiumfolien, insbesondere mit Dicken von 1 bis 20 $\mu$m aufweisenden. Zur Fertigung von abgekanteten und/oder streckgezogenen Formteilen für den Leichtbau — z. B. für die obengenannten Anwendungen — sind derartige Verbunde ungeeignet.

In der DE-A-1 955 969 wird ein Verfahren zur Herstellung von Metall-Kunststoff-Verbundplatten durch Kaschieren eines Bandes aus thermoplastischem Kunststoff mit mindestens einem Metallband beschrieben, das vor dem Kaschieren einer Wärmebehandlung unterworfen wird, indem es im Durchlaufverfahren zwischen zwei Kaschierwalzen geführt wird. Die Wärmebehandlung unmittelbar vor dem Kaschieren wird erreicht, indem das Metallband in einem vor den Kaschierwalzen angeordneten Durchlaufofen zunächst auf die zur Erreichung des gewünschten Zustandes notwendige Temperatur erwärmt wird. Dann wird das Metallband gegebenenfalls auf die zur Vereinigung mit dem Kunststoffband notwendige Temperatur abgekühlt. Die vor dem Kaschieren lösungsgeglühten Legierungen können besser verformt werden und dabei kalt aushärten. Die Lösungsglühtemperaturen liegen zwischen 350 und 600 °C. Die zur Durchführung des Verfahrens eingesetzte Vorrichtung zeichnet sich durch einen vor den Kaschierwalzen angeordneten Bandglühofen mit drei hintereinander folgenden Zonen zum Aufheizen, Auf-Temperatur-Halten und Abkühlen des Metallbandes.

Die EP-A-0 019 835 bezieht sich auf einen formbaren Metall-Kunststoff-Metallverbundschichtkörper und ein Verfahren zu dessen Herstellung. Nach dieser Offenlegungsschrift werden extrem dünne Verbunde hergestellt, die eine gesamte Dicke von 0,125-1,625 mm haben, wobei die metallischen Deckschichten nur 0,05-0,5 mm dick sind und das Dickenverhältnis von Metall zu Kunststoff unter 9 : 1 liegt. Diese extrem dünnen Verbunde haben bei einem Biegewinkel von 90° einen Biegeradius, der ungefähr der gesamten Dicke des Verbundes entspricht.

Die EP-A-0 019 835 enthält viele Details über die Zusammensetzung der Kunststoffkernschicht, den Einsatz von Klebefolien, den Einbau von Verstärkungselementen in die Kunststoffschicht und die verbesserte Haftung durch eine Oberflächenbehandlung.

Versuche mit Deckschichten aus einer wärmebehandelten AlMgSi — Legierung und einer 1 mm dicken Kunststoffkernschicht aus Polypropylen oder Polyäthylen haben ergeben, dass in bezug auf Biegen und Streckziehen nicht die gewünschten Eigenschaften erzielt werden können. Aufgrund der geringen Metalldicken der Deckbleche (bis 0,25 mm) neigen die Dreischichten- bzw. Fünfschichtenverbunde (mit zwei Klebefolien) mit thermoplastischem Kunststoffkern beim Umformen zum frühzeitigen Versagen wegen örtlichen Einschnürens des Aluminiums oder zu geringer Festigkeit des Aluminiums in Relation zur Dehnung. Diese Effekte treten vor allem bei dem erwähnten Biegen und Streckziehen auf. Daraus ergibt sich, dass die dünnen Verbundplatten im Vergleich zu Aluminiumblech gleicher Steifigkeit sehr schlechte Umformeigenschaften haben.

Die Erfinder haben sich die Aufgabe gestellt, eine dünne, umformbare Verbundplatte aus mehreren Schichten, mit mindestens einer metallischen Deckschicht und einem Kunststoffkern, zu schaffen, die zur Herstellung von abgekanteten und/oder streckgezogenen Formteilen für den Leichtbau geeignet sind. Die Verarbeitung soll auf herkömmlichen, möglichst wenig modifizierten Werkzeugen erfolgen können.

Die Aufgabe wird erfindungsgemäss durch eine Verbundplatte gelöst, die sich durch die Merkmale des Anspruchs 1 auszeichnet.

Vorteilhafte Weiterbildungen der erfindungsgemässen Verbundplatte sind durch die Merkmale der Ansprüche 2 bis 4 gekennzeichnet.

Für beide Varianten der Aluminiumlegierung der Deckschichten wird als thermoplastischer Kunststoff bevorzugt ein Polyolefin, insbesondere ein Propylen oder Polyäthylen von hoher Dichte, eingesetzt.

Im thermoplastischen Kunststoff können Verstärkungsfasern, die aus bekannten Werkstoffen, insbesondere jedoch aus Glas- oder Kohlenstoffasern, bestehen, eingelagert sein. Dadurch wird wohl die Festigkeit, je nach Fasertyp, insbesondere die Steifigkeit, bedeutend erhöht, dagegen sind Verstärkungsfasern beim Biegen der Verbundplatte hinderlich.

Bei Verwendung eines thermoplastischen Kunststoffkerns mit polaren funktionellen Gruppen kann dieser durch Erwärmen und mit Druckwalzen direkt mit den metallischen Deckschichten verbunden werden, die Kernschicht entfaltet eine selbstklebende Wirkung.

2

Bei Verwendung eines thermoplastischen Kunststoffkerns ohne polare funktionelle Gruppen muss zwischen Metall und Kunststoff ein Kleber bzw. eine Klebefolie angeordnet werden. Es ist bekannt, dass diese zweckmässig aus einem Copolymer aus Aethylen und äthylenisch ungesättigter Carboxylsäure bestehen, wobei der Einsatz von Acrylsäure als Carboxylsäure besonders gut geeignet ist.

Die metallischen Deckschichten sind vorzugsweise 0,05-1 mm, insbesondere 0,25-0,4 mm, dick. Die Kernschicht dagegen ist üblicherweise 0,5-3 mm dick, bevorzugt 1,0-1,7 mm. Für die gesamte Verbundplatte ergibt das Dicken zwischen etwa 0,5 und 5 mm, vorzugsweise zwischen etwa 1,5 und 2,5 mm.

Bei einer Verbundplatte aus einem thermoplastischen Kunststoffkern und zwei darauf geklebten metallischen Deckschichten ist es nicht zwangsläufig notwendig, die beiden Deckschichten aus Metall gleich dick herzustellen. Sehr wohl kann die eine Schicht in kleinerem oder grösserem Masse von der Dicke der anderen Schicht abweichen. Beim Biegen der Verbundplatte wird dann zweckmässig die dünnere metallische Deckschicht die Innenseite der Abkantung oder des tiefgezogenen Materials bilden.

Ueberraschend kann bei Verwendung der erfindungsgemässen dünnen, umformbaren Verbundplatten mit den spezifischen metallischen Deckschichten die Dehnung gegenüber Verbundplatten mit metallischen Deckschichten von anderer Legierungszusammensetzung bis zu 50 % gesteigert werden. Dieser Effekt ist dadurch begründet, dass das Dehnverhalten der erfindungsgemässen spezifischen Aluminiumlegierungen mit feinem Korn- bzw. Subkorngefüge demjenigen des thermoplastischen Kunststoffkerns ähnlich ist. Die Kompatibilität der Spannungs-Dehnungs-Kurven der Aluminiumlegierung der Deckschichten und des thermoplastischen Kunststoffs der Kernschicht bewirken einen breiten Bereich der quasistabilen Dehnung.

Versuchsserien haben gezeigt, dass der minimale Biegeradius vom Biegewinkel abhängig ist. Bei einem Biegewinkel von 90° kann der Biegeradius ohne Delaminierung des Verbundkörpers auf ungefähr einen der Schichtdicke entsprechenden Wert gesenkt werden. Bei einem Biegewinkel von 180° dagegen, der beim Abkanten üblich ist, liegt der erreichte minimale Biegeradius beim 1,2-fachen Wert der Schichtdicke.

Mit weiteren Versuchen ist das Verhalten der erfindungsgemässen dünnen Verbundplatten beim Streckziehen beobachtet worden. Als Mass für das Streckziehen wird üblicherweise die sogenannte « Limiting Dome Height » verwendet. Dabei wird die Umformbarkeit der Verbundplatte in Prozenten vom Wert ausgedrückt, der mit einem der Gesamtdicke des Verbundes entsprechenden metallischen Blech aus dem Deckflächenmaterial erzielt würde. In der US-A-4 313 996 wird in Spalte 1, Zeilen 60-65, angegeben, dass für die « Limiting Dome Height » von dünnen Verbundplatten Werte von mindestens 60 % erhalten werden können.

Bei dünnen Verbundplatten mit Deckschichten der erfindungsgemässen Zusammensetzung dagegen liegen die niedrigsten gemessenen Werte weit über 80 %.

Die Erfindung wird anhand der Zeichnung und von Ausführungsbeispielen näher erläutert.

Die schematischen Vertikalschnitte zeigen in

Fig. 1 einen Teilschnitt durch eine dünne, umformbare Verbundplatte, und

Fig. 2 eine bekannte Vorrichtung zum Biegen der Verbundplatte um 180°.

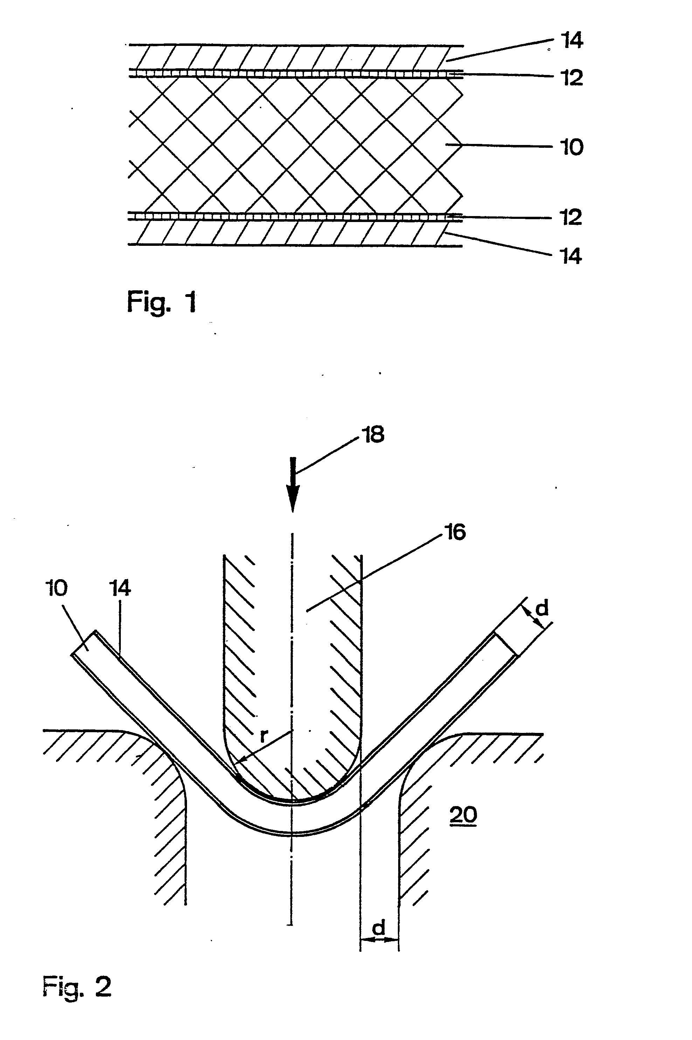

Die in Fig. 1 dargestellte dünne Verbundplatte umfasst einen 1,1 mm dicken Kern 10 aus Polypropylen. Darauf sind mittels zweier Klebefolien 12 (z. B. PP-Bonding Sheet X 22 519 der Firma HERCULES) zwei metallische Deckschichten 14 aus einer erfindungsgemäss eingesetzten Aluminiumlegierung mit 1,4 Gew.-% Fe und 0,4 Gew.-% Mn aufgebracht.

Die in Fig. 2 dargestellte dünne Verbundplatte 10, 14 wird mittels eines Stempels 16 in Richtung 18 durch die schlitzartige Oeffnung einer Matrize 20 gedrückt. Die Schlitzbreite in der Matrize 20 entspricht der Summe des doppelten Biegeradius r und der doppelten Dicke d der Verbundplatte 10, 12. Uebersichtlichkeitshalber ist der Biegeradius r überproportional gross gewählt worden. In Wirklichkeit liegt er beim Biegen um 180°, wie gemäss Fig. 2 ausgeführt, beim 1,2- bis 1,5-fachen Wert der Dicke d der Verbundplatte.

Die erfindungsgemässe dünne, umformbare Verbundplatte wird zur Herstellung von abgekanteten und/oder streckgezogenen Formteilen verwendet, insbesondere im Automobilbau als Karosserieteile oder Filter, im Apparatebau als Gehäuse und im Hochbau als dekorative Elemente.

Einige Legierungsbeispiele für Deckschichten sind in der nachstehenden Tabelle I zusammengefasst. Alle ergeben eine sehr gute Qualität von dünnen Verbundplatten, die problemlos umformbar sind.

(Siehe Tabelle Seite 4 f.)

## Tabelle I : Legierungs-Beispiele

| Legierung | Glessverfahren | Hochglühung | Warmwalzen | Kaltwalzen | Zwischenglühung | Kaltwalzen | Endglühung |
|---|---|---|---|---|---|---|---|
| AlFeMn AA 8014 | Strangguss | --- | 450-550°C auf 5-8 mm | 65-90% | ev. 350°C | >70% | 250-380°C |
| | Bandguss | 500-550°C | --- | (>90%) auf End-stärke | --- | --- | 350-450°C |
| AlMn AA 3003 | Strangguss | 600-630°C | 400-520°C auf 5-8 mm | (>90%) auf End-stärke | --- | --- | 280-450°C |
| | Strangguss | --- | 400-520°C auf 5-8 mm | auf End-stärke | --- | --- | 250-300°C |
| | Bandguss | 530-600°C | --- | auf End-stärke | --- | --- | 280-450°C |
| | Bandguss | --- | --- | auf End-stärke | --- | --- | 250-300°C |

EP 0 184 549 B1

**Patentansprüche**

1. Dünne, umformbare Verbundplatte aus mehreren Schichten mit mindestens einer Deckschicht (14) aus einer Aluminiumlegierung mit einer flachen Spannungs-Dehnungskurve und einer thermoplastischen Kernschicht (10) aus Kunststoff, dadurch gekennzeichnet, dass die Kernschicht 0,5-3 mm, die Deckschicht (14) 0,05-1 mm dick ist und entweder aus einer Legierung von 0,8-1,5 Gew.-% Fe, je bis zu 0,5 Gew.-% Si und Mn, wobei die Summe von Si und Mn 0,2-0,8 Gew.-% beträgt, und anderen üblichen Bestandteilen bis zu je 0,3 Gew.-%, insgesamt bis zu 0,8 Gew.-%, Rest Aluminium, oder aus einer Legierung von 0,1-1,9 Gew.-% Mn, 0,1-0,7 Gew.-% Fe, 0,05-0,4 Gew.-% Si, 0-1,0 Gew.-% Mg, 0-0,3 Gew.-% Cu, Rest Aluminium besteht, welche zu Barren bzw. Bändern vergossen, nach dem Warm- bzw. Giesswalzen mit einer Abkühlgeschwindigkeit von mindestens 0,5 °C/sec auf eine Temperatur unterhalb 120 °C gebracht und dann bis zu einer Dickenabnahme von mindestens 75 % ohne Zwischenglühung kaltgewalzt und bei Enddicke geglüht worden ist.

2. Verbundplatte nach Anspruch 1, dadurch gekennzeichnet, dass die Aluminiumlegierung der Deckschicht (14) 1,1 Gew.-% Fe und 0,25 Gew.-% Mn enthält, wobei das Gewichtsverhältnis von Fe zu Mn vorzugsweise zwischen 2,5 und 4,5 liegt.

3. Verbundplatte nach Anspruch 1 oder 2, dadurch gekennzeichnet, dass die Aluminiumlegierung der Deckschicht (14) ausser Fe, Si und Mn höchstens je 0,1 Gew.-% von jedem weiteren chemischen Element enthält.

4. Verbundplatte nach einem der Ansprüche 1 bis 3, dadurch gekennzeichnet, dass die Deckschicht (14) 0,25-0,4 mm und die Kernschicht (10) 1,0-1,7 mm dick ist.

**Claims**

1. Thin, formable laminated panel consisting of several layers with at least one cover layer (14) consisting of an aluminium alloy having a flat stress-strain curve and a thermoplastic core layer (10) of plastic, characterized in that the core layer is 0.5 to 3 mm thick and the cover layer (14) is 0.05 to 1 mm thick and consists either of an alloy of 0.8 to 1.5 % by weight Fe, up to 0.5 % by weight Si and up to 0.5 % by weight Mn, the sum of Si and Mn being 0.2 to 0.8 % by weight, and other conventional constituents each in an amount of up to 0.3 % by weight, in total up to 0.8 % by weight, remainder aluminium, or of an alloy of 0.1 to 1.9 % by weight Mn, 0.1 to 0.7 % by weight Fe, 0.05 to 0.4 % by weight Si, 0 to 1.0 % by weight Mg and 0 to 0.3 % by weight Cu, remainder aluminium, which alloy has been cast into bars or strips, after hot-rolling or continuous casting and rolling has been brought at a cooling rate of at least 0.5 °C/sec to a temperature below 120 °C and has then been cold-rolled to a decrease in thickness of at least 75 % without an intermediate heat treatment and has been heat-treated at the final thickness.

2. Laminated panel according to Claim 1, characterized in that the aluminium alloy of the cover layer (14) contains 1.1 % by weight Fe and 0.25 % by weight Mn, the weight ratio of Fe to Mn preferably being between 2.5 and 4.5.

3. Laminated panel according to Claim 1 or 2, characterized in that the aluminium alloy of the cover layer (14) contains, in addition to Fe, Si and Mn, at most 0.1 % by weight in each case of each further chemical element.

4. Laminated panel according to one of Claims 1 to 3, characterized in that the cover layer (14) is 0.25 to 0.4 mm thick and the core layer (10) is 1.0 to 1.7 mm thick.

**Revendications**

1. Tôle composite mince, déformable, constituée de plusieurs couches avec au moins une couche de revêtement (14) en un alliage d'aluminium à courbe contrainte-allongement plate et avec une couche thermoplastique, formant noyau, (10) en plastique, caractérisée, en ce que la couche formant noyau a une épaisseur de 0,05-3 mm, en ce que la couche de revêtement (14) a une épaisseur de 0,05-1 mm et qu'elle est fabriquée soit en un alliage de 0,8-1,5 % en poids Fe, respectivement jusqu'à 0,5 % en poids Si et Mn, étant précisé que la somme de Si et Mn atteint 0,2-0,8 % en poids, et d'autres constituants habituels allant jusqu'à respectivement 0,3 % en poids, au total jusqu'à 0,8 % en poids, le reste est en aluminium ; soit en un alliage de 0,1-1,9 % en poids Mn, 0,1-1,9 % en poids Mn, 0,1-0,7 % en poids Fe, 0,05-0,4 % en poids Si, 0-1,0 % en poids Mg, 0-0,3 % en poids Cu, le reste en aluminium, alliage que l'on coule en barres ou en bandes, que l'on amène après laminage à chaud ou laminage de coulée continue, avec une vitesse de refroidissement d'au moins 0,5 °C/s, à une température inférieure à 120 °C, puis que l'on lamine a froid pour obtenir une réduction d'épaisseur d'au moins 75 % sans recuit intermédiaire et que l'on recuit à son épaisseur finale.

2. Tôle composite selon la revendication 1, caractérisée en ce que l'alliage d'aluminium de la couche de revêtement (14) contient 1,1 % en poids Fe et 0,25 % en poids Mn, étant précisé que le rapport de poids entre Fe et Mn se situe de préférence entre 2,5 et 4,5.

3. Tôle composite selon la revendication 1 ou 2, caractérisée en ce qu'en dehors de Fe, Si et Mn, l'alliage d'aluminium de la couche de revêtement (14) contient au maximum respectivement 0,1 % en poids de chaque autre élément chimique.

4. Tôle composite selon l'une des revendications 1 à 3, caractérisée en ce que la couche de revêtement (14) a une épaisseur de 0,25-0,4 mm et la couche formant noyau (10), une épaisseur de 1,0-1,7 mm.

Fig. 1

Fig. 2